Europäisches Patentamt

European Patent Office

Office européen des brevets

(11) Numéro de publication : **0 574 320 A1**

# (12) DEMANDE DE BREVET EUROPEEN

(21) Numéro de dépôt : **93401485.3**

(22) Date de dépôt : **10.06.93**

(51) Int. Cl.⁵ : **G02B 6/38**

(30) Priorité : **12.06.92 FR 9207093**

(43) Date de publication de la demande :
**15.12.93 Bulletin 93/50**

(84) Etats contractants désignés :
**DE GB**

(71) Demandeur : **FRANCE TELECOM**
**6, Place d'Alleray**
**F-75015 Paris (FR)**

(72) Inventeur : **Boscher, Daniel**
**Résidence de la Plage**
**F-22560 Trebeurden (FR)**
Inventeur : **Brault, Jean-Charles**
**21, rue de Molein**
**F-22560 Trebeurden (FR)**

(74) Mandataire : **Martin, Jean-Jacques et al**
**Cabinet REGIMBEAU 26, Avenue Kléber**
**F-75116 Paris (FR)**

(54) **Système de raccordement bivoie de fibres optiques monomodes.**

(57)    Selon l'invention, le système de raccordement comprend :
— au moins une enveloppe (10) essentiellement cylindrique comportant une chambre
interne (11) de précision,
— au moins deux ferrules (100,200) engagées
dans ladite chambre interne de précision et
recevant chacune une fibre optique monomode
(101,201) à raccorder,
— au moins une cale (300) essentiellement
cylindrique engagée également dans ladite
chambre de précision et apte à immobiliser les
deux ferrules dans ladite chambre tout en autorisant un alignement de celles-ci.
Application dans le domaine des télécommunications classiques pour le raccordement de
lignes d'abonnés.

*FIG. 1*

EP 0 574 320 A1

La présente invention concerne un système de raccordement bivoie de fibres optiques monomodes.

L'invention trouve une application particulièrement avantageuse pour la réalisation de liaisons bidirectionnelles dans tous les domaines où des concepts de multiplexage électrique ou optique sont trop coûteux par rapport à une solution bifibre optique monomode, et notamment dans le domaine des télécommunications classiques pour le raccordement de lignes d'abonnés.

Actuellement, on connaît de la publication japonaise S. NAGASAWA - IEE photonics - vol.3 - n° 10 - Octobre 1991, une technique de connexion multifibre optique par surmoulage, consistant à prépositionner en usine très précisément à l'aide d'un système de centrage mécanique lesdites fibres optiques à connecter dans une douille de raccordement, à constituer deux douilles identiques de raccordement comportant chacune les deux fibres optiques à connecter positionnées précisément, puis à positionner exactement en regard l'une de l'autre les deux douilles de raccordement de manière à ce que lesdites fibres optiques soient exactement alignées, et enfin à surmouler l'ensemble des deux douilles en regard.

Cette technique japonaise par surmoulage en usine, présente l'inconvénient d'utiliser des moyens technologiques très lourds ne pouvant être mis en oeuvre sur un chantier.

Afin de pallier les inconvénients de la technique antérieure connue, l'invention propose un connecteur multifibre permettant une connexion bivoie de fibres optiques monomodes de bonne qualité optique, ledit connecteur pouvant être réalisé à partir d'éléments standards fabriqués industriellement, et utilisés actuellement massivement dans le cadre de la connexion monovoie à fibre optique monomode.

Plus particulièrement, l'invention concerne un système de raccordement bivoie de fibres optiques monomodes, comprenant :
- au moins une enveloppe essentiellement cylindrique comportant une chambre interne de précision,
- au moins deux ferrules engagées dans ladite chambre interne de précision, et recevant chacune une fibre optique monomode à raccorder,
- au moins une cale essentiellement cylindrique engagée également dans ladite chambre de précision et apte à immobiliser les deux ferrules dans ladite chambre tout en autorisant un alignement de celles-ci.

Suivant un mode de réalisation du sytème de raccordement selon l'invention, ledit système comprend une première enveloppe cylindrique semi-rigide fermée, comportant une chambre interne de précision dans laquelle sont engagées les deux ferrules.

De plus, selon l'invention les deux ferrules émergent axialement de ladite première enveloppe cylindrique semi-rigide fermée.

Ainsi, selon l'invention, ladite première enveloppe cylindrique semi-rigide appelée communément douille peut être avantageusement réalisée en matériau métallique comme dans le cas d'une douille d'un connecteur monomode classique, l'ensemble de la douille contenant les deux ferrules munies des fibres optiques monomodes constitue un embout câblé qui sera raccordé manuellement à un autre embout du même type.

D'autre part, selon le mode de réalisation du système de raccordement selon l'invention, celui-ci comprend une deuxième enveloppe cylindrique élastique, comportant une chambre de précision dans laquelle sont engagées les deux ferrules.

Avantageusement, ladite deuxième enveloppe contient une cale cylindrique flottante de diamètre $d_2$ tel que ladite cale flottante vienne tangentiellement au contact desdites ferrules.

Ainsi, selon l'invention, lesdites ferrules émergeant de ladite première enveloppe et engagées dans ladite deuxième enveloppe, sont positionnées et immobilisées dans ladite deuxième enveloppe par l'intermédiaire de ladite cale cylindrique. Les ferrules sont alors prêtes à être connectées à un ensemble de deux autres ferrules faisant partie d'un deuxième embout câblé identique au premier et destinées à être engagées dans ladite deuxième enveloppe élastique, ladite deuxième enveloppe élastique constituant le corps du système de raccordement.

Il convient de préciser que toutes les opérations de montage du système de raccordement selon l'invention sont manuelles et peuvent être réalisées très facilement sur un chantier.

La description qui va suivre en regard du dessin annexé donné à titre d'exemple non limitatif, fera bien comprendre en quoi consiste l'invention et comment elle peut être réalisée.

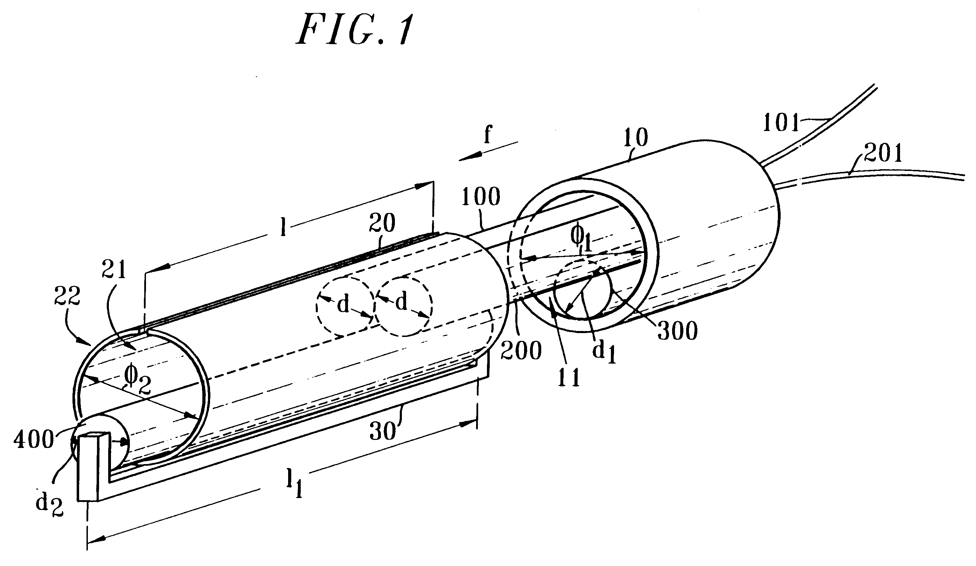

- La figure 1 est une vue schématique partielle en perspective du système de raccordement selon l'invention.

Sur la figure 1, on a représenté un système de raccordement bivoie de fibres optiques monomodes. Ce système de raccordement comprend une première enveloppe cylindrique 10 semi-rigide fermée, comportant une chambre interne de précision cylindrique de révolution 11 de diamètre $\phi1$ dans laquelle sont engagées axialement deux ferrules de précision 100,200 cylindrique de révolution de telle sorte que les axes desdites ferrules soient parallèles et que ces dernières émergent axialement de ladite chambre interne de précision. De plus, les ferrules 100,200 présentent ici un diamètre identique d.

Ces ferrules de précision 100,200 présentent une forme de tube comportant un canal central destiné à recevoir une fibre optique monomode 101,201 à raccorder.

Plus particulièrement, la première enveloppe cylindrique 10 appelée communément douille par l'homme du métier peut être constituée en un matériau métallique tout comme celle utilisée dans un connecteur monomode classique connu, ou bien en un matériau plastique surmoulé avec des conduits de préguidage des fibres optiques.

Les ferrules 100,200 sont constituées en un matériau céramique, en verre ou en silice et les fibres optiques 101,201 sont collées à l'intérieur desdites ferrules, les extrémités desdites fibres optiques étant traitées par polissage global.

Pour obtenir une bonne transmission optique à travers les fibres optiques monomodes raccordées dans une connexion bivoie, les solutions couramment employées dans le cadre d'une connexion monovoie, telles que le polissage bombé assurant le contact physique ou le polissage en biais, sont insufisantes, et il est préférable d'appliquer auxdites fibres un traitement antiréflexion tel qu'il est décrit dans le brevet français CNET n° 2 632 735.

En outre, une cale essentiellement cylindrique de révolution 300 est engagée également axialement à l'intérieur de la chambre de précision 11 de ladite douille 10 de sorte que l'axe de la cale 300 soit parallèle aux axes des ferrules 100,200. Cette cale 300 fixe est un tronçon de ferrule de longueur sensiblement égale à la longueur de la douille et présente un diamètre $d_1$ tel qu'une fois mise en place dans ladite chambre de précision, ladite cale 300 est tangentiellement au contact desdites ferrules 100,200 afin de les immobiliser et de les précentrer dans la douille.

L'ensemble constitué par la douille 10 dans laquelle sont engagées lesdites ferrules 100,200 câblées est appelé un embout câblé.

Suivant le mode de réalisation de la figure 1, le diamètre $\phi_1$ de la chambre de précision 11 est par exemple égal à 2,5 mm et le diamètre d desdites ferrules de précision 100,200 est égal au diamètre $d_1$ de la cale fixe 300. Dans ce cas, il est démontré que le diamètre nominal d des trois ferrules 100,200,300 s'exprime en fonction dudit diamètre $\phi_1$ suivant la relation :

$$d = \left(\frac{3}{3 + 2\sqrt{3}}\right)\phi_1 \quad (1)$$

ce qui donne pour un diamètre $\phi_1$ égal à 2,5 mm, un diamètre d égal à 1,16 mm.
Les trois ferrules 100,200,300 ont alors une position équilatérale dans ladite douille 10.

Bien entendu, lorsque les ferrules de précision 100,200 présentent un diamètre d dont la valeur s'écarte légèrement de la valeur nominale précitée d'une valeur $\Delta$ d, le diamètre $d_1$ de la cale 300 est alors différent dudit diamètre d pour compenser la variation $\Delta$ d du diamètre d. La variation $\Delta d_1$ dudit diamètre $d_1$ autour de la valeur nominale s'exprime alors en fonction de la variation $\Delta$ d suivant l'expression :

$$\Delta d_1 = -\frac{3}{4}\Delta d \quad (2)$$

D'autre part, nous soulignons que la valeur du diamètre $\phi_1$ égale à 2,5 mm est une valeur standard pour une douille de raccordement standard utilisée actuellement dans 99 % des connecteurs monovoie et que des ferrules céramiques de diamètre de l'ordre de 1,2 mm sont réalisées facilement en usine grâce aux progrès effectués ces dernières années sur l'usinage des ferrules céramiques. En termes techniques la précision d'usinage obtenue en usine est actuellement inférieure au micromètre et en termes économiques l'usinage d'une ferrule représente un coût compris entre 10 et 20 francs.

Par ailleurs, le système de raccordement de la figure 1 comprend une deuxième enveloppe cylindrique 20 élastique comportant une chambre de précision 21 cylindrique de révolution de diamètre $\Phi_2$ ici égale au diamètre $\Phi_1$ de la chambre de précision de la douille 10. Cette deuxième enveloppe élastique 20 est destinée à recevoir axialement les ferrules de précision 100,200 qui émergent axialement de la douille 10 et est appelée communément corps de connecteur.

Plus particulièrement, la deuxième enveloppe élastique 20 est une bague en céramique cylindrique fendue suivant une génératrice, identique à celle utilisée dans un connecteur monovoie classique, ou encore suivant une variante de réalisation, un cylindre en élastomère présentant un module d'Young de l'ordre de 1 daN/mm2.

En outre, la deuxième enveloppe cylindrique 20 contient également à l'intérieur de sa chambre de précision 21 une cale cylindrique de révolution flottante 400 présentant un diamètre $d_2$ de sorte que lorsque les ferrules 100,200 sont engagées axialement dans la deuxième enveloppe 20, par une de ses extrémités, la cale flottante 400 vient tangentiellement au contact desdites ferrules 100,200, l'axe de ladite cale 400 étant parallèle aux axes desdites ferrules.

Suivant le mode de réalisation présenté à la figure 1, le diamètre $d_2$ de ladite cale flottante 400 est égale au diamètre $d_1$ de la cale fixe 300. Il convient de préciser que de la même façon que le diamètre $d_1$, le diamètre $d_2$ s'exprime suivant les expressions (1) ou (2) précitées respectivement dans les cas où $d_2$ est égal à d et $d_2$ est différent de d.

Cette cale flottante 400 est apte à immobiliser lesdites ferrules 100,200 à l'intérieur de la bague 200 de manière à ce qu'on puisse manuellement positionner facilement en regard desdites ferrules 100,200 deux autres ferrules identiques provenant d'un autre embout câblé non représenté identique à celui décrit précédemment, les deux autres ferrules non représentées étant de la même manière introduites dans ladite bague 20 par sa deuxième extrémité 22.

En particulier, la cale flottante cylindrique 400 présente une longueur $L_1$ supérieure ou égale à la longueur L de ladite bague fendue 20 et est montée à chaque extrémité dans un étrier 30 positionné à l'extérieur de ladite bague le long d'une génératrice. Cet étrier 30 est libre de tourner autour de la surface extérieure de la bague fendue 20.

De ce fait, lorsque les deux embouts câblés sont positionnés de part et d'autre de ladite bague fendue 20 de telle sorte que chacune des paires de ferrules portant les fibres optiques monomodes soit engagée à l'intérieur de la chambre de précision 21 et disposée sensiblement en regard l'une de l'autre, on centre les deux embouts câblés l'un par rapport à l'autre, et on aligne le mieux possible les ferrules contenant les fibres optiques par l'intermédiaire de la cale flottante 400 montée sur l'étrier 30.

Lorsque cet alignement est réalisé, le raccordement des fibres optiques monomodes est effectué et donne de très bonnes conditions de transmission.

Il convient de préciser que le système de raccordement bivoie de la figure 1 présente une très faible perte d'insertion de l'ordre de 0,3 dB et un très bon taux de réflexion des fibres optiques monomodes raccordées.

Enfin, nous précisons que tous les éléments de la connectique non représentés et non décrits, à savoir le corps de réception de la bague 20, les systèmes d'accrochage de câbles, les systèmes de préguidage des embouts, les ressorts d'applications, le système de verrouillage sont identiques à des éléments standards connus de connectique classique.

**Revendications**

1. Système de raccordement bivoie de fibres optiques monomodes, caractérisé en ce qu'il comprend :
   - au moins une enveloppe essentiellement cylindrique comportant une chambre interne de précision,
   - au moins deux ferrules (100,200) engagées dans ladite chambre interne de précision et recevant chacune une fibre optique monomode à raccorder,
   - au moins une cale essentiellement cylindrique engagée également dans ladite chambre de précision et apte à immobiliser les deux ferrules (100,200) dans ladite chambre tout en autorisant un alignement de celles-ci.

2. Système de raccordement selon la revendication 1, caractérisé en ce qu'il comprend une première enveloppe cylindrique semi-rigide fermée (10) comportant une chambre interne de précision (11) dans laquelle sont engagées les deux ferrules (100,200).

3. Système de raccordement selon l'une des revendications 1 ou 2, caractérisé en ce que la première enveloppe semi-rigide fermée (10) contient également une cale cylindrique fixe (300) présentant un diamètre $d_1$ tel que ladite cale (300) mise en place dans ladite chambre de précision (11), vienne tangentiellement au contact desdites ferrules (100,200).

4. Système de raccordement selon l'une des revendications 2 ou 3, caractérisé en ce que les deux ferrules (100,200) émergent axialement de ladite première enveloppe cylindrique semi-rigide fermée (10).

5. Système de raccordement selon l'une quelconque des revendications 1 à 4, caractérisé en ce qu'il comprend une deuxième enveloppe cylindrique élastique (20) comportant une chambre de précision (21) dans laquelle sont engagées les deux ferrules (100,200).

6. Système de raccordement selon la revendication 5, caractérisé en ce que ladite deuxième enveloppe (20) contient une cale cylindrique flottante (400) de diamètre $d_2$ tel que ladite cale flottante (400) vienne tangentiellement au contact desdites ferrules (100,200).

7. Système de raccordement selon la revendication 6, caractérisé en ce que ladite cale cylindrique flottante (400) est montée à chaque extrémité, dans un étrier (30) extérieur à ladite deuxième enveloppe (20) apte à tourner autour de cette dernière.

8. Système de raccordement selon l'une des revendications 5 ou 6, caractérisé en ce que ladite deuxième enveloppe élastique (20) présentant une longueur L, ladite cale flottante (400) présente une longueur $L_1$ supérieure ou égale à ladite longueur L.

9. Système de raccordement selon l'une des revendications 1 à 8, caractérisé en ce que la première enveloppe semi-rigide (10) présentant un diamètre $\Phi_1$, la deuxième enveloppe élastique (20) présente un diamètre $\Phi_2$ identique audit diamètre $\Phi_1$.

10. Système de raccordement selon la revendication 9, caractérisé en ce que le diamètre $d_1$ de la cale fixe (300) est identique au diamètre $d_2$ de la cale flottante (400).

11. Système de raccordement selon l'une des revendications 1 à 10, caractérisé en ce que les deux ferrules (100,200) présentent un diamètre identique d.

12. Système de raccordement selon la revendication 11, caractérisé en ce que le diamètre d des ferrules (100,200) est identique au diamètre $d_i$ (avec i=1ou2) d'au moins une cale cylindrique (300,400).

13. Système de raccordement selon la revendication 12, caractérisé en ce que le diamètre nominal d des ferrules (100,200) s'exprime en fonction du diamètre $\Phi_i$ (avec i=1ou2) de l'enveloppe cylindrique correspondante (10,20) suivant une relation égale à :

$$d = (\frac{2}{3 + 2\sqrt{3}})\, \Phi_i$$

14. Système de raccordement selon l'une des revendications 1 à 11, caractérisé en ce que le diamètre d des ferrules (100,200) étant différent du diamètre $d_i$ (avec i=1ou2) d'au moins une cale cylindrique (300,400) présente une variation $\Delta d$ par rapport à la valeur nominale et en ce que le diamètre $d_i$ (avec i=1ou2) de la cale cylindrique correspondante présente une variation $\Delta d_i$ (avec i=1ou2) autour de la valeur nominale d s'exprimant en fonction de la variation $\Delta d$ suivant l'expression :

$$\Delta d_i = \frac{-3}{4}\, \Delta d$$

15. Système de raccordement selon l'une des revendications 1 à 14, caractérisé en ce que les ferrules (100,200) sont en matériau céramique.

16. Système de raccordement selon l'une des revendications 1 à 14, caractérisé en ce que les ferrules (100,200) sont en verre.

17. Système de raccordement selon l'une des revendications 1 à 14, caractérisé en ce que les ferrules (100,200) sont en silice.

*FIG.1*

EP 0 574 320 A1

Office européen
des brevets

**RAPPORT DE RECHERCHE EUROPEENNE**

Numero de la demande

EP    93 40 1485

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | PATENT ABSTRACTS OF JAPAN vol. 7, no. 30 (P-173)1983 & JP-A-57 181 511 ( NIPPON DENKI ) * abrégé * | 1 | G02B6/38 |
| A | DE-A-2 627 021 (DEUTSCHE ITT INDUSTRIES) * page 1, alinéa 1 -alinéa 2 * * page 2, dernier alinéa  – page 3, alinéa 2; figures 1,2 * | 1 | |
| A | DE-A-2 931 018 (FELTEN & GUILLEAUME CARLSWERK) * page 6, alinéa 3; figure 2 * | 1 | |
| A | EP-A-0 423 928 (ADAMANT KOGYO) * abrégé; figure 5 * | 1 | |

DOMAINES TECHNIQUES RECHERCHES (Int. Cl.5)

G02B

Le présent rapport a été établi pour toutes les revendications

| Lieu de la recherche | Date d'achèvement de la recherche | Examinateur |
|---|---|---|
| BERLIN | 26 JUILLET 1993 | HYLLA W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................................
& : membre de la même famille, document correspondant

EPO FORM 1503 03.82 (P0402)